# EUROPÄISCHE PATENTSCHRIFT

(11) **EP 1 794 444 B1**
(45) Veröffentlichungstag und Bekanntmachung des Hinweises auf die Patenterteilung: **04.06.2008**
(21) Anmeldenummer: 05787330.9
(22) Anmeldetag: 08.09.2005
(51) Int. Cl.: F02M 69/54, F02M 61/16, G05D 16/02, F02M 63/00

(54) **DRUCKREGLER FÜR EINE KRAFTSTOFF-FÖRDEREINHEIT**
PRESSURE REGULATOR FOR A FUEL SUPPLY UNIT
REGULATEUR DE PRESSION POUR UNE UNITE DE REFOULEMENT DE CARBURANT

(30) Priorität: 01.10.2004 DE 102004048386
(43) Veröffentlichungstag der Anmeldung: 13.06.2007
(73) Patentinhaber: Continental Automotive GmbH, 30165 Hannover (DE)
(72) Erfinder: DIESING, Detlev, 65795 Hattersheim (DE); ECK, Karl, 60318 Frankfurt (DE); SCHMID, René, 60385 Frankfurt/Main. (DE)
(86) Internationale Anmeldenummer: PCT/EP2005/054453
(87) Internationale Veröffentlichungsnummer: WO 2006/037708

(56) Entgegenhaltungen:
- US-A- 4 903 721
- US-A- 5 429 094
- US-A- 5 520 215
- US-B1- 6 325 048
- US-B1- 6 330 878

## Beschreibung

Die Erfindung betrifft einen Druckregler für eine Kraftstoff-Fördereinheit eines Kraftfahrzeuges mit einem Ventil zur Verbindung eines Anschlusses mit einem Auslass oberhalb eines vorgesehenen Drucks in dem Anschluss, mit einem Ventilkörper und einem Ventilsitz und mit einem Federelement zur Vorspannung des Ventilkörpers gegen den Ventilsitz.

US 4,903,721 A weist einen Druckregler mit feststehendem Ventilsitz, welcher an einer Bohrung angeordnet ist, und einem mehrteiligen, beweglichen Ventilkörper auf.

Solche Druckregler werden in heutigen Kraftfahrzeugen häufig zur Regelung eines Drucks in einer zu einer Brennkraftmaschine führenden Vorlaufleitung eingesetzt und sind aus der Praxis bekannt. Der Ventilkörper ist meist als Kugel ausgebildet und dichtet unterhalb eines vorgesehenen Drucks gegenüber dem Ventilsitz ab. Der Auslass ist auf der dem Anschluss gegenüberliegenden Seite des Ventilsitzes angeordnet. Die Kugel wird oberhalb des vorgesehenen Drucks von dem Druck im Anschluss von dem Ventilsitz abgehoben, so dass Kraftstoff zu dem Auslass überströmen kann. Für die erforderliche Dichtheit muss die Kugel besonders genaue Abmessungen und eine Oberfläche mit einer möglichst geringen Rautiefe aufweisen. Daher wird die Kugel in der Regel poliert oder geläppt.

Nachteilig bei dem bekannten Druckregler ist, dass er ein sehr aufwändiges Fertigungsverfahren zur Herstellung des Ventilkörpers erfordert. Weiterhin erfordert der als Kugel ausgebildete Ventilkörper eine aufwändige Führung in dem Druckregler

Der Erfindung liegt das Problem zugrunde, einen Druckregler der eingangs genannten Art so zu gestalten, dass er konstruktiv besonders einfach aufgebaut und kostengünstig zu fertigen ist.

Dieses Problem wird erfindungsgemäß dadurch gelöst, dass der Ventilkörper als einteiliges, dünnwandiges Blechteil gestaltet ist, und der Ventilsitz Teil eines beweglichen Kolbens ist.

Durch diese Gestaltung kann der Ventilkörper besonders einfach geführt werden. Da sich das Blechteil wesentlich leichter und flacher fertigen lässt als die Kugel des bekannten Druckreglers, hat der erfindungsgemäße Druckregler besonders kleine Abmessungen. Weiterhin lässt sich der Ventilkörper beispielsweise im Stanzverfahren besonders kostengünstig fertigen. Hierdurch ist der erfindungsgemäße Druckregler konstruktiv besonders einfach aufgebaut und lässt sich kostengünstig fertigen.

Ein Toleranzausgleich zwischen dem an einer Bohrung angeordneten Ventilsitz und dem Ventilkörper lässt sich gemäß einer vorteilhaften Weiterbildung der Erfindung einfach erzeugen, wenn der Ventilkörper an seiner dem Ventilsitz zugewandten Seite die Form einer Kugelkappe aufweist. Ein weiterer wesentlicher.Vorteil besteht darin, dass die Kugelkappe eine geringere axiale Ausdehnung als eine Kugel hat, wodurch sich der erfindungsgemäße Ventilkörper besonders flach ausbilden lässt, so dass der Ventilkörper weniger Bauraum in axialer Erstreckung benötigt. Die Kugelkappe lässt sich zudem durch Umformen des Blechteils einfach fertigen.

Die Montage des Ventilkörpers gestaltet sich gemäß einer anderen vorteilhaften Weiterbildung der Erfindung besonders einfach, wenn der Ventilkörper Rasthaken zur Halterung an einem Trägerteil hat.

Die Verbindung der Rasthaken mit dem Trägerteil wird vereinfacht, wenn das Trägerteil entsprechend ausgebildete Aufnahmen für die Rasthaken aufweist.

Der Ventilkörper erfordert gemäß einer anderen vorteilhaften Weiterbildung der Erfindung keine aufwändige Führung, wenn die Rasthaken gegenüber dem Trägerteil ein vorgesehenes Spiel, insbesondere ein radiales Spiel, aufweisen. Das hat den Vorteil, dass infolge des Spiels ein radialer Toleranzausgleich ermöglicht wird.

Neben dem radialen Toleranzausgleich lassen sich auch Toleranzen in axialer Erstreckung zwischen dem Ventilkörper und dem Ventilsitz einfach ausgleichen, indem gemäß einer anderen vorteilhaften Weiterbildung der Erfindung der Ventilkörper an dem Trägerteil abstützende Federzungen aufweist. Dabei wird der Umstand genutzt, dass die Rasthaken des Ventilkörpers gegenüber den Aufnahmen am Trägerteil ein axiales Spiel aufweisen. Auf diese Weise lässt sich der Ventilkörper im zusammenwirken mit den Anschlägen der Rasthaken am Trägerteil und den Federzungen axial vorspannen.

Ein weiterer Vorteil der Federzungen besteht darin, dass damit eine besonders flache Kennlinie des Druckreglers erreicht wird, da die Federzungen den Ventilkörper auch dann anheben, wenn der Kolben sich nach oben bewegt.

Der Ventilkörper lässt sich gemäß einer anderen vorteilhaften Weiterbildung der Erfindung kippfrei vorspannen und/oder führen, wenn er mindestens drei Federzungen und/oder mindestens drei Rasthaken hat.

Eine verwindungssteife Halterung des Ventilkörpers lässt sich gemäß einer anderen vorteilhaften Weiterbildung der Erfindung mit besonders geringem konstruktiven Aufwand erzeugen, wenn die Federzungen und die Rasthaken abwechselnd über den Umfang des Ventilkörpers verteilt angeordnet sind.

Bei dem bekannten Druckregler entstehen beim Aufschlagen des als Kugel ausgebildeten Ventilkörpers auf den Ventilsitz störende Geräusche. Geräusche lassen sich gemäß einer anderen vorteilhaften Weiterbildung der Erfindung zuverlässig vermeiden, wenn die dem Ventilsitz zugewandte Seite des Ventilkörpers eine Beschichtung aufweist. Weiterhin wird hierdurch eine zuverlässige Dichtheit bei geringen Drucken im Anschluss gewährleistet.

Zur weiteren Erhöhung der Dichtheit des Ventilkörpers gegenüber dem Ventilsitz trägt es gemäß einer anderen vorteilhaften Weiterbildung der Erfindung bei, wenn die Beschichtung von einem Elastomer erzeugt ist. Für eine hohe Dichtheit, geringe Klebeneigung des Ventilkörpers an dem Ventilsitz und geringe Geräuschemissionen eignen sich als Beschichtung insbesondere Acrylnitril-Butadien-Kautschuke (NBR) oder der unter dem Handelsnamen Viton bekannte Fluorkautschuk.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Figur 1: einen Längsschnitt durch einen erfindungsgemäßen Druckregler,
- Figur 2: eine stark vergrößerte, perspektivische Darstellung eines Ventilkörpers des erfindungsgemäßen Druckreglers aus Figur 1.

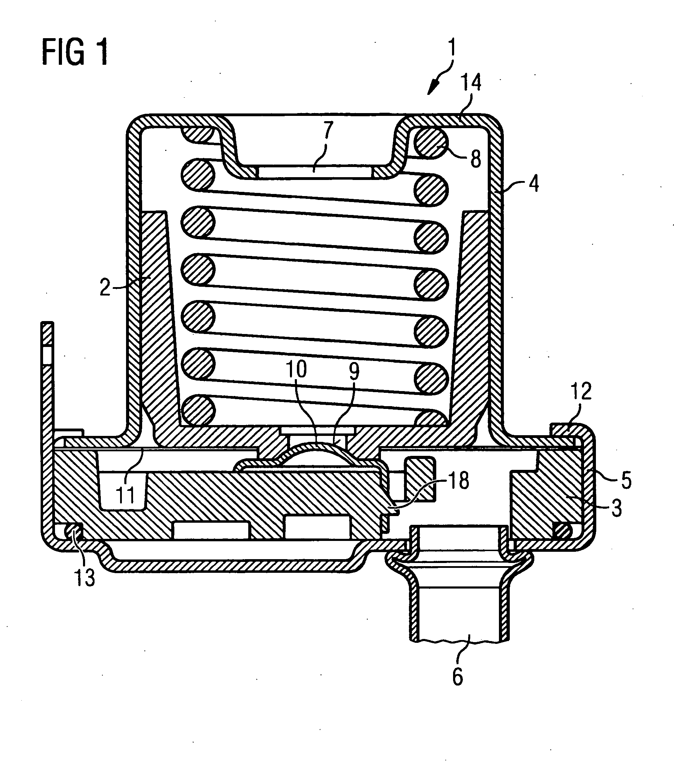

Figur 1 zeigt einen erfindungsgemäßen, als Durchflussventil ausgebildeten Druckregler mit einem Gehäuse 1 und einem in dem Gehäuse 1 verschieblich angeordneten Kolben 2. Der Druckregler dient zur Begrenzung eines Maximaldrucks in einer nicht dargestellten Vorlaufleitung eines Kraftstoffbehälters eines Kraftfahrzeuges. Das Gehäuse 1 weist zwei von einem Trägerteil 3 auf Abstand gehaltene Gehäuseteile 4, 5 auf. Der Druckregler hat einen Anschluss 6 für eine Druckleitung und einen Auslass 7. Der Kolben 2 ist mittels einer als Wendelfeder ausgebildeten Feder 8 mit einem Ventilsitz 9 gegen einen Ventilkörper 10 vorgespannt.

Eine mit dem Trägerteil 3 und dem Kolben 2 verbundene Membran 11 dichtet den Bereich unterhalb des Kolbens 2 von dem Bereich oberhalb des Kolbens 2 ab. Hierdurch wird sichergestellt, dass bei einem Druck in dem Anschluss 6 der Kolben 2 gegen die Kraft der Feder 8 belastet wird und oberhalb eines vorgesehenen Drucks der Kolben 2 bewegt wird, so dass der Ventilsitz 9 von dem Ventilkörper 10 abhebt. Damit kann oberhalb des vorgesehenen Drucks Kraftstoff von dem Anschluss 6 durch den Auslass 7 entweichen. Die Gehäuseteile 4, 5 sind aus Stahlblech gefertigt und durch eine Umbördelung 12 miteinander verbunden. Durch die Umbördelung 12 wird ein Dichtring 13 zwischen dem Trägerteil 3 und dem unteren Gehäuseteil 5 vorgespannt. Ein die Feder 8 haltender Rand 14 des oberen Gehäuseteils 4 ist plastisch verformbar gestaltet und dient zur Kalibrierung des Druckreglers und damit zur Einstellung des vorgesehenen Drucks, bei dem die Verbindung zwischen dem Anschluss 6 und dem Auslass 7 erzeugt wird.

Der Ventilkörper 10 ist als Blechteil ausgebildet und weist Federzungen 15 und Rasthaken 16 auf. Mit den Rasthaken 16 ist der Ventilkörper 10 mit dem Trägerteil 3 verbunden, wobei die Rasthaken 16 mit Aufnahmen 18 des Trägerteils 3 im Eingriff stehen. Die Rasthaken 16 sind mit radialem und axialem Spiel zu den Aufnahmen 18 ausgebildet. Über die Federzungen 15 und den an den Aufnahmen 18 anliegenden Rasthaken 18 ist der Ventilkörper 10 in axialer Richtung vorgespannt, wobei die Federzungen 15 eine geringfügige Bewegung des Ventilkörpers 10 in axialer Richtung erlauben. Das freie Ende der Federzungen 15 ist dazu radial verschieblich auf dem Trägerteil 3 angeordnet. Infolge des radialen Spiels der Rasthaken 16 gegenüber den Aufnahmen 18 am Trägerteil 3 ist der Ventilkörper 10 auch in radialer Richtung beweglich angeordnet, so dass dadurch der radiale Toleranzausgleich möglich ist. Weiterhin lässt Figur 1 erkennen, dass der dem Ventilsitz 9 gegenüberstehende Bereich des Ventilkörpers 10 als Kugelkappe ausgebildet ist.

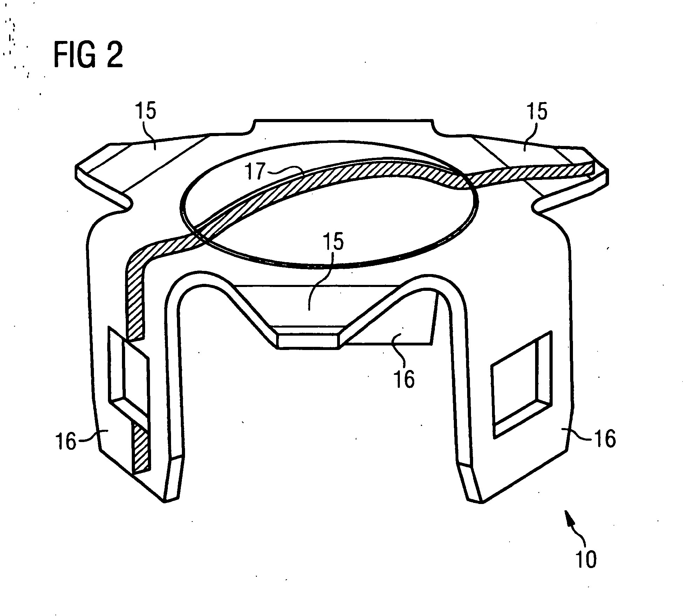

Figur 2 zeigt eine stark vergrößerte perspektivische Darstellung des als Blechteil ausgebildeten Ventilkörpers 10 aus Figur 1. Zur Verdeutlichung der Form des Ventilkörpers 10 ist in der Darstellung ein Schnitt eingezeichnet. Hierbei ist zu erkennen, dass der Ventilköper 10 jeweils drei Rasthaken 16 und Federzungen 15 aufweist. Die Rasthaken 16 und die Federzungen 15 sind jeweils in Abständen von 120° über den Umfang des Ventilkörpers 10 verteilt und zueinander abwechselnd angeordnet. Weiterhin zeigt Figur 2, dass der Ventilkörper 10 auf seiner dem in Figur 1 dargestellten Ventilsitz 9 zugewandten Seite eine Beschichtung 17 aus einem Elastomer hat.

## Patentansprüche

1. Druckregler für eine Kraftstoff-Fördereinheit eines Kraftfahrzeuges mit einem Ventil zur Verbindung eines Anschlusses (6) mit einem Auslass (7) oberhalb eines vorgesehenen Drucks in dem Anschluss (6), mit einem an einer Bohrung angeordneten, beweglichen Ventilsitz (9) und einem den Ventilsitz (9) verschließenden Ventilkörper (10) und mit einem Federelement (8) zur Vorspannung des Ventilsitzes (9) gegen den Ventilkörper (10),
**dadurch gekennzeichnet , dass** der Ventilkörper (10) als einteiliges, dünnwandiges Blechteil gestaltet ist und das der Ventilsitz (9) Teil eines beweglichen Kolbens (2) ist.

2. Druckregler nach Anspruch 1, **dadurch gekennzeichnet, dass** der Ventilkörper (10) an seiner dem Ventilsitz (9) zugewandten Seite die Form einer Kugelkappe aufweist.

3. Druckregler nach Anspruch 1 oder 2, **dadurch gekennzeichnet, dass** die dem Ventilsitz (9) zugewandte Seite des Ventilkörpers (10) eine Beschichtung (17) aufweist.

4. Druckregler nach zumindest einem der vorhergehenden Ansprüche, **dadurch gekennzeichnet , dass** die Beschichtung (17) von einem Elastomer erzeugt ist.

5. Druckregler nach zumindest einem der vorhergehenden Ansprüche, **dadurch gekennzeichnet , dass** der Ventilkörper (10) Rasthaken (16) zur Halterung an einem Trägerteil (3) hat.

6. Druckregler nach zumindest einem der vorhergehenden Ansprüche, **dadurch gekennzeichnet , dass** das Trägerteil (3) Aufnahmen (18) für die Rasthaken (16) aufweist.

7. Druckregler nach zumindest einem der vorhergehenden Ansprüche, **dadurch gekennzeichnet , dass** die Rasthaken (16) gegenüber dem Trägerteil (3) ein radiales und/oder axiales Spiel aufweisen.

8. Druckregler nach zumindest einem der vorhergehenden Ansprüche, **dadurch gekennzeichnet , dass** der Ventilkörper (10) an dem Trägerteil (3) abstützende Federzungen (15) aufweist.

9. Druckregler nach zumindest einem der vorhergehenden Ansprüche, **dadurch gekennzeichnet, dass** die Enden der Federzungen (15) in dem Trägerteil (3) radial und/oder axial verschieblich angeordnet sind.

10. Druckregler nach zumindest einem der vorhergehenden Ansprüche, **dadurch gekennzeichnet , dass** der Ventilkörper (10) mindestens drei Federzungen (15) und/oder mindestens drei Rasthaken (16) hat.

11. Druckregler nach zumindest einem der vorhergehenden Ansprüche, **dadurch gekennzeichnet , dass** die Federzungen (15) und die Rasthaken (16) abwechselnd über den Umfang des Ventilkörpers (10) verteilt angeordnet sind.

## Claims

1. Pressure regulator for a fuel supply unit of a motor vehicle, with a valve for joining a connection (6) to an outlet (7) above a designated pressure in the connection (6), with a movable valve seat (9), and with a spring element arranged on a bore and a valve body (10) sealing the valve seat (9), for prestressing the valve seat (9) against the valve body (10), **characterized in that** the valve body (10) is designed as a single-part, thin-walled sheet-metal part, and **in that** the valve seat (9) is part of a movable piston (2).

2. Pressure regulator according to claim 1, **characterized in that** the valve body (10) is in the form of a spherical cap on its side facing the valve seat (9).

3. Pressure regulator according to claim 1 or 2,
**characterized in that that** side of the valve body (10) which faces the valve seat (9) has a coating (17).

4. Pressure regulator according to at least one of the preceding claims, **characterized in that** the coating (17) is produced from an elastomer.

5. Pressure regulator according to at least one of the preceding claims, **characterized in that** the valve body (10) has latching hooks (16) for securing on a support part (3).

6. Pressure regulator according to at least one of the preceding claims, **characterized in that** the support part (3) has receptacles (18) for the latching hooks (16).

7. Pressure regulator according to at least one of the preceding claims, **characterized in that** the latching hooks (16) have radial and/or axial play in relation to the support part (3).

8. Pressure regulator according to at least one of the preceding claims, **characterized in that** the valve body (10) has spring tongues (15) supported on the support part (3).

9. Pressure regulator according to at least one of the preceding claims, **characterized in that** the ends of the spring tongues (15) are arranged in a radially and/or axially displaceable manner in the support part (3).

10. Pressure regulator according to at least one of the preceding claims, **characterized in that** the valve body (10) has at least three spring tongues (15) and/or at least three latching hooks (16).

11. Pressure regulator according to at least one of the preceding claims, **characterized in that** the spring tongues (15) and the latching hooks (16) are distributed in an alternating manner over the circumference of the valve body (10).

## Revendications

1. Régulateur de pression pour une unité de transfert de carburant d'un véhicule automobile, comportant une soupape permettant de relier un raccordement (6) avec une sortie (7) lorsque la pression dans le raccordement (6) dépasse une pression prévue, un siège de soupape (9) mobile placé sur un alésage et un corps de soupape (10) fermant le siège de soupape (9) et un organe à ressort (8) permettant de soumettre le siège de soupape (9) à une contrainte contre le corps de soupape (10), **caractérisé par le fait que** le corps de soupape (10) est conçu sous la forme de pièce unique en tôle mince et que le siège de soupape (9) fait partie d'un piston (2) mobile.

2. Régulateur de pression selon la revendication 1, **caractérisé par le fait que** le corps de soupape (10) a, sur son côté tourné vers le siège de soupape (9), la forme d'une calotte sphérique.

3. Régulateur de pression selon la revendication 1 ou 2, **caractérisé par le fait que** le côté du corps de soupape (10) tourné vers le siège de soupape (9) est recouvert d'un revêtement (17).

4. Régulateur de pression selon au moins l'une des revendications précédentes, **caractérisé par le fait que** le revêtement (17) est produit par un élastomère.

5. Régulateur de pression selon au moins l'une des revendications précédentes, **caractérisé par le fait que** le corps de soupape (10) a des crochets de retenue (16) pour le maintenir sur une pièce support (3).

6. Régulateur de pression selon au moins l'une des revendications précédentes, **caractérisé par le fait que** la pièce support (3) comporte des logements (18) pour les crochets de retenue (16).

7. Régulateur de pression selon au moins l'une des revendications précédentes, **caractérisé par le fait que** les crochets de retenue (16) ont un jeu radial et/ou axial par rapport à la pièce support (3).

8. Régulateur de pression selon au moins l'une des revendications précédentes, **caractérisé par le fait que** le corps de soupape (10) comporte des languettes à ressort (15) s'appuyant sur la pièce support (3).

9. Régulateur de pression selon au moins l'une des revendications précédentes, **caractérisé par le fait que** les extrémités des languettes à ressort (15) sont montées en translation dans le sens radial et / ou axial dans la pièce support (3).

10. Régulateur de pression selon au moins l'une des revendications précédentes, **caractérisé par le fait que** le corps de soupape (10) a au moins trois languettes à ressort (15) et/ou au moins trois crochets de retenue (16).

11. Régulateur de pression selon au moins l'une des revendications précédentes, **caractérisé par le fait que** les languettes à ressort (15) et les crochets de retenue (16) sont répartis en alternance sur la périphérie du corps de soupape (10).
